# EUROPÄISCHE PATENTSCHRIFT

(11) **EP 3 480 054 B1**
(45) Veröffentlichungstag und Bekanntmachung des Hinweises auf die Patenterteilung: **17.06.2020**
(21) Anmeldenummer: 17200114.1
(22) Anmeldetag: 06.11.2017
(51) Int. Cl.: B60M 1/18

(54) **ELEKTRISCHE TRENNUNGEN IN DECKENSTROMSCHIENEN**
ELECTRICAL SEPARATIONS IN CEILING BUSBARS
SÉPARATIONS ÉLECTRIQUES À L'INTÉRIEUR DES RAILS CONDUCTEURS DU PLAFOND

(43) Veröffentlichungstag der Anmeldung: 08.05.2019
(73) Patentinhaber: Furrer + Frey AG, 3000 Bern 6 (CH)
(72) Erfinder: FURRER, Beat, 3012 Bern (CH); CASALI, Bruno, 3125 Toffen (CH)
(74) Vertreter: von Bülow & Tamada

(56) Entgegenhaltungen:
- EP-A1- 2 805 847
- FR-A5- 2 140 934
- GB-A- 2 059 689

## Beschreibung

Die vorliegende Erfindung betrifft eine Anschlussvorrichtung zum Überführen eines Strom aus einem Fahrdraht abnehmenden Pantographen eines auf einem Gleis in einer Fahrtrichtung fahrenden Zuges vom Fahrdraht auf eine Leitkufe und eine parallel zur Leitkufe verlaufenden Isolierkufe in einem Streckentrenner, eine Stromschiene für den Streckentrenner und eine Isolierkufe für den Streckentrenner.

Ein Streckentrenner ist aus der DE 1 163 894 B bekannt. Der Streckentrenner umfasst zwei parallel zueinander angeordnete Leitkufen, die in Fahrtrichtung durch Isolierkufen elektrisch unterbrochen sind. Die elektrische Unterbrechung ist so ausgeführt, dass sich die Leitkufen über einen Wegabschnitt in Fahrtrichtung überlappen. Laut DE 1 163 894 B haben bekannte Streckentrenner allerdings den Nachteil, dass sie von Zügen mit Geschwindigkeiten von deutlich weniger als 120 km/h passiert werden müssen, weil der Pantograph eines Zuges aufgrund der nie exakt einregulierbaren Isolier- und Leitkufen ein Drehmoment um die Fahrtrichtungsachse in den Streckentrenner einträgt, welches die Qualität der Stromabnahme negativ beeinflusst. In DE 1 163 894 B wird dieses Nachteil durch die Ausbildung des Trenners als Parallelogramm vermieden.

Die EP 2 805 847 A1 offenbart einen Streckentrenner für starre Stromschienen der jeweils mit einer Stromschiene verbundene Leitkufen, eine Rampe und eine Isolierkufe aufweist. Die Leitkufen und die Rampe sind an einem Ende miteinander verbunden und mit ihren anderen Enden mit der Stromschiene verbunden, wobei die letztgenannten Enden in Längsrichtung gegeneinander versetzt angeordnet sind. Die beiden Stromschienen sind durch Isolierprofile starr und verwindungssteif miteinander verbunden. An den Isolierprofilen sind gegenüberliegend zur jeweiligen Leitkufe Isolierkufen angebracht, so dass ein Stromabnehmer beim Vorbeifahren korrekt geführt ist. Zwischen den Enden der Leitkufen und den Enden der nächstliegenden Isolierkufe ist ein Isolierabstand vorhanden.

Aufgabe der Erfindung ist, den Streckentrenner dahingehend zu verbessern, dass das zuvor genannte Drehmoment minimiert wird, um den negativen Einfluss auf die Qualität der Stromabnahme zu minimieren, wenn ein Zug den Streckentrenner mit mindestens 100km/h passiert. Die Aufgabe wird durch ein Anschlussstück für einen Streckentrenner gemäß den Merkmalen des Anspruchs 1 gelöst. Bevorzugte Weiterbildungen der Erfindung sind Gegenstand der abhängigen Ansprüche.

Gemäß einem Aspekt der Erfindung, umfasst ein Anschlussstück zum Überführen eines Strom aus einem Fahrdraht abnehmenden Pantographen eines auf einem Gleis in einer Fahrtrichtung fahrenden Zuges vom Fahrdraht auf eine Leitkufe und eine parallel zur Leitkufe verlaufenden Isolierkufe in einem Streckentrenner die folgenden Merkmale:
- eine planparallel zum Gleis anordenbare Platte mit einer in Fahrtrichtung gesehenen vom Streckentrenner wegrichtbaren Eingangskante zum Anschluss einer den Fahrdraht tragenden ersten Stromschiene und mit einer in Fahrtrichtung gesehen auf den Streckentrenner zurichtbaren Ausgangskante zum Anschluss einer die Leitkufe tragenden zweiten Stromschiene und beabstandet davon einer die Isolierkufe tragenden dritten Stromschiene,
- ein an einer zum Gleis richtbaren Unterseite der Platte angeordnetes erstes Halteelement zum Tragen eines von der ersten Stromschiene zur zweiten Stromschiene führenden ersten Verbindungsdrahtes, und
- ein an der Unterseite der Platte angeordnetes zweites Halteelement zum Tragen eines von der ersten Stromschiene zur dritten Stromschiene führenden zweiten Verbindungsdrahtes.

Die Platte des angegebenen Anschlussstücks lässt sich fixiert an einem Untergrund, wie beispielsweise einer Decke in einem Tunnel, an einer Brücke mit einer extra geschaffenen Untergrundkonstruktion verdrehfest montieren. So kann der die Verbindungsdrähte berührende Pantograph den Streckentrenner mit dem Anschlussstück grundsätzlich nicht mehr um die Fahrtrichtungsachse herum verdrehen. Durch die Einstellbarkeit des Abstandes der Verbindungsdrähte von der Platte lassen sich diese exakt auf den Pantographen ausrichten, so dass das eingangs genannte Drehmoment und damit die mechanischen Belastungen auf den Streckentrenner minimiert werden, wodurch wiederum der negative Einfluss auf die Qualität der Stromabnahme minimiert wird, wenn ein Zug den Streckentrenner mit mindestens 100km/h passiert.

In einer Weiterbildung des angegebenen Anschlussstückes besitzt die Platte von der Eingangskante zur Ausgangskante hin aufeinander zu laufende Seitenkanten. Liegen die Seitenkanten achsensymmetrisch zueinander, so dass die Platte im Wesentlichen die Form eines gleichschenkligen Dreiecks besitzt, und ist die Plattensymmetrieachse dieses gleichschenkligen Dreiecks am Fahrdraht der Stromschiene ausgerichtet, sind die um die Drehachse, hier die Plattensymmetrieachse, wirksamen Hebelarme des Anschlussstückes, beim Einfahren des Zuges in das Anschlussstück zunächst klein und steigen dann erst an, insofern die zuvor genannten Abstände der Verbindungsdrähte von der Platte nicht exakt auf den Pantographen ausgerichtet sind. Auf diese Weise lassen sich die mechanischen Belastungen auf den Streckentrenner weiter minimieren, wodurch wiederum der negative Einfluss auf die Qualität der Stromabnahme weiter minimiert wird, wenn ein Zug den Streckentrenner mit mindestens 100km/h passiert.

In einer zusätzlichen Weiterbildung des angegebenen Anschlussstückes weist die Platte mittig eine Aussparung auf, wobei die beiden Halteelemente auf gegenüberliegenden Seiten der Aussparung zwischen der Eingangskante und der Ausgangskante angeordnet sind. Auf diese Weise lässt sich das Gewicht der Platte wirksam reduzieren. Ist die Ausnehmung ferner symmetrisch zur zuvor genannten Plattensymmetrieachse ausgebildet, so lassen sich die wirksamen Hebelarme des Anschlussstückes weiter reduzieren.

In einer noch zusätzlichen Weiterbildung des angegebenen Anschlussstückes ist die Aussparung verstrebt, um die mechanische Stabilität des Anschlusstückes gegenüber den zuvor genannten mechanischen Belastungen zu erhöhen.

In einer anderen Weiterbildung umfasst das angegebene Anschlussstück eine auf der Platte stehende und sich winklig zur Fahrtrichtung erstreckende Querrippe und/oder eine auf der Platte stehende sich winklig zur Ausgangskante, das heißt winklig zur Querrippe, erstreckende Längsrippe. Die Rippen erhöhen die mechanische Stabilität der Platte weiter.

In einer besonderen Weiterbildung des angegebenen Anschlussstückes stehen die Rippen auf unterschiedlichen Seiten der Platte.

In einer besonders bevorzugten Weiterbildung umfasst das angegebene Anschlussstück sich in und entgegen der Fahrtrichtung erstreckende Steckelemente an der Eingangskante und der Ausgangskante zum Einführen in die Stromschienen. Auf diese Weise kann das angegebene Anschlussstück in einfacher Weise an herkömmliche Stromschienen angebunden werden.

Gemäß einem weiteren Aspekt der Erfindung umfasst eine Stromschiene zum Anschließen an eines der angegebenen Anschlussstücke einen sich in Fahrtrichtung erstreckenden Querarm und zwei beabstandet voneinander vom Querarm abragende Spannarme, zwischen denen der Fahrdraht einklemmbar ist, wobei der Querarm einen sich von einem Ende der Stromschiene in Fahrrichtung erstreckenden Schlitz umfasst, über den in die Stromschiene eine Isolierkufe einsetzbar ist.

Der angegebenen Stromschiene liegt die Überlegung zugrunde, dass diese sich grundsätzlich wie eine herkömmliche Stromschiene aufbauen lässt, wie sie beispielsweise aus der DE 20 2004 009 420 U1 bekannt sind. Zwischen den Spannarmen herkömmlicher Stromschienen ist prinzipbedingt ein Hohlraum ausgebildet, in dem die Isolierkufe für den Strecktrenner gehalten werden kann. Allerdings muss die Isolierkufe zur Minimierung des negativen Einflusses auf die Qualität der Stromabnahme so exakt wie möglich auf den in der Stromschiene eingeklemmten Draht ausgerichtet sein, damit die mechanische Belastung auf den Streckentrenner selbst bei hohen Geschwindigkeiten des Zuges von über 100km/h noch ausreichend gering gehalten wird. Diese exakte Ausrichtung lässt sich über den Schlitz in der Stromschiene erreichen.

In einer Weiterbildung der angegebenen Stromschiene sind an den Spannarmen aufeinander zu gerichtet winklig zum Schlitz Führungselemente angeordnet, die die Isolierkufe beim Einsetzen in die Stromschiene führen. Auf diese Weise kann die Isolierkufe im Schlitz geführt millimetergenau in ihrer Höhe zum Draht ausgerichtet werden, was bei den zuvor genannten Geschwindigkeiten des Zuges eine spürbare Reduktion der mechanischen Belastungen auf den Streckentrenner mit der angegebenen Stromschiene mit sich bringt.

In einer besonderen Weiterbildung sind die Führungselemente an Führungsplatten ausgebildet, die an die Spannarme anlegbar sind. Durch die Führungsplatten lässt sich eine beliebige Stromschiene vor Ort durch einfaches Einsägen des Schlitzes in den Querbalken und Anlegen der Führungselemente an die Spannarme in eine angegebene Stromschiene umwandeln. Auf diese Weise müssen die angegebenen Stromschienen nicht extra von einem Werk angeliefert werden, was die Montage eines Streckentrenners mit der angegebenen Stromschiene deutlich vereinfacht.

In einer besonders bevorzugten Weiterbildung der angegebenen Stromschiene verjüngt sich der Schlitz ausgehend vom Ende der Stromschiene zumindest bereichsweise.

Gemäß einem weiteren Aspekt der Erfindung umfasst eine Isolierkufe zum Einsetzen in eine der angegebenen Stromschienen einen sich in Fahrtrichtung erstreckenden plattenförmigen Stab mit einem in Fahrtrichtung gesehenen Ende, an welchem Formschlusselemente für einen Führungsformschluss mit den Führungselementen an der Stromschiene beim Einsatz in den Schlitz der Stromschiene ausgebildet sind. Die angegebene Isolierkufe lässt sich als Einzelteil an eine zu fertigende Bahnstrecke mit einem Streckentrenner anliefern, wobei sich der Streckentrenner modular vor Ort aufbauen lässt.

In einer Weiterbildung umfasst die angegebene Isolierkufe eine Verstärkungsplatte, die in einer Höhenrichtung gesehen auf den plattenförmigen Stab zumindest bereichsweise aufgesetzt ist. Der plattenförmige Stab ist im eingesetzten Zustand normalerweise auf Zug belastet, kann allerdings auch Knickbelastungen ausgesetzt sein. Zur Aufnahme dieser Knickbelastungen, ist die Verstärkungsplatte auf den plattenförmigen Stab aufgesetzt.

Gemäß einem weiteren Aspekt der Erfindung umfasst ein Streckentrenner zwei angegebene mit ihren Ausgangskanten aufeinander zu gerichtete Anschlussvorrichtungen und zwei parallel zueinander verlaufende die Ausgangskanten miteinander verbindende Kontaktstrecken mit je zwei angegebenen Stromschienen, deren geschlitzte Querarme aufeinander zu gerichtet sind und zwischen denen je eine angegebene Isolierkufe gehalten ist, wobei die Isolierkufen der beiden Kontaktstrecken in Fahrtrichtung gesehen versetzt zueinander angeordnet sind.

Gemäß einem weiteren Aspekt der Erfindung umfasst eine Schutzstrecke zwei angegebene mit ihren Ausgangskanten aufeinander zu gerichtete Anschlussvorrichtungen und zwei parallel zueinander verlaufende die Ausgangskanten miteinander verbindende Kontaktstrecken mit je zwei angegebenen Stromschienen, deren geschlitzte Querarme aufeinander zu gerichtet sind und zwischen denen je zwei angegebene Isolierkufen gehalten sind, wobei die Isolierkufen der beiden Kontaktstrecken in Fahrtrichtung gesehen versetzt zueinander angeordnet und durch je eine weitere Stromschiene verbunden sind, die sich in Fahrtrichtung überlappen.

Die oben beschriebenen Eigenschaften, Merkmale und Vorteile dieser Erfindung sowie die Art und Weise wie diese erreicht werden, werden verständlicher im Zusammenhang mit der folgenden Beschreibung der Ausführungsbeispiele, die im Zusammenhang mit der Zeichnung näher erläutert werden. Es zeigen:
Fig. 1 eine schematische Ansicht einer Fahrstrecke für einen Zug,
Fig. 2 eine schematische Draufsicht auf einen Streckentrenner für die Fahrstrecke der Fig. 1,
Fig. 3 eine schematische Draufsicht auf die Schutzstrecke für die Fahrstrecke der Fig. 1,
Fig. 4 eine schematische Ansicht eines Anschlussstücks für den Streckentrenner der Fig. 2 oder die Schutzstrecke der Fig. 3,
Fig. 5 eine schematische Explosionsansicht eines Teiles des Anschlussstücks der Fig. 4,
Fig. 6 eine schematische Explosionsansicht eines Halteelementes für das Anschlussstück der Fig. 4,
Fig. 7 eine schematische Explosionsansicht einer Stromschiene, die an eine Eingangskante des Anschlussstücks der Fig. 4 anschließbar ist, und

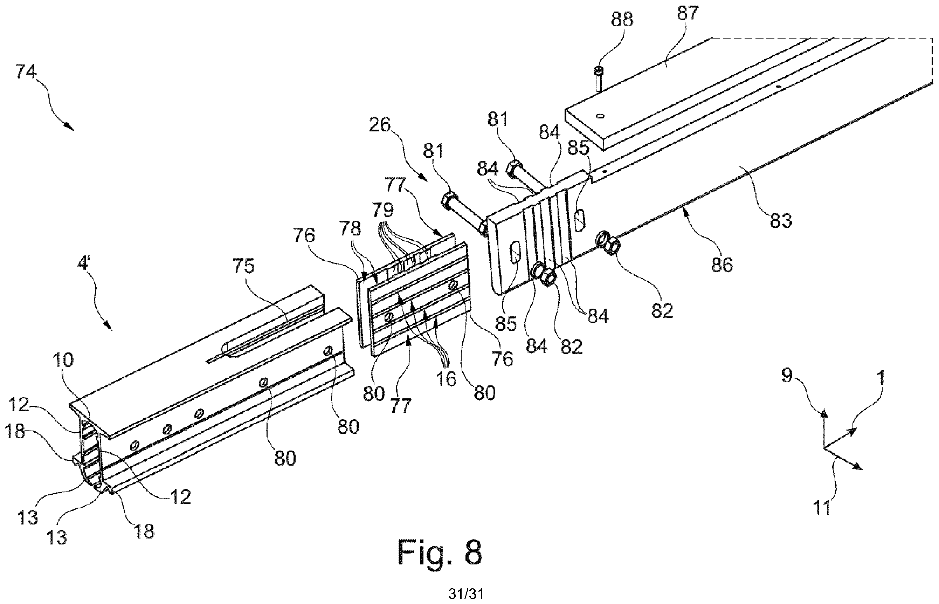

Fig. 8 eine schematische Explosionsansicht einer Verbindungsstelle zwischen einer Stromschiene und einer Isolierkufe in dem Streckentrenner der Fig. 2 oder der Schutzstrecke der Fig. 3.

In den Figuren werden gleiche technische Elemente mit gleichen Bezugszeichen versehen und nur einmal beschrieben. Die Figuren sind rein schematisch und geben vor allem nicht die tatsächlichen geometrischen Verhältnisse wieder.

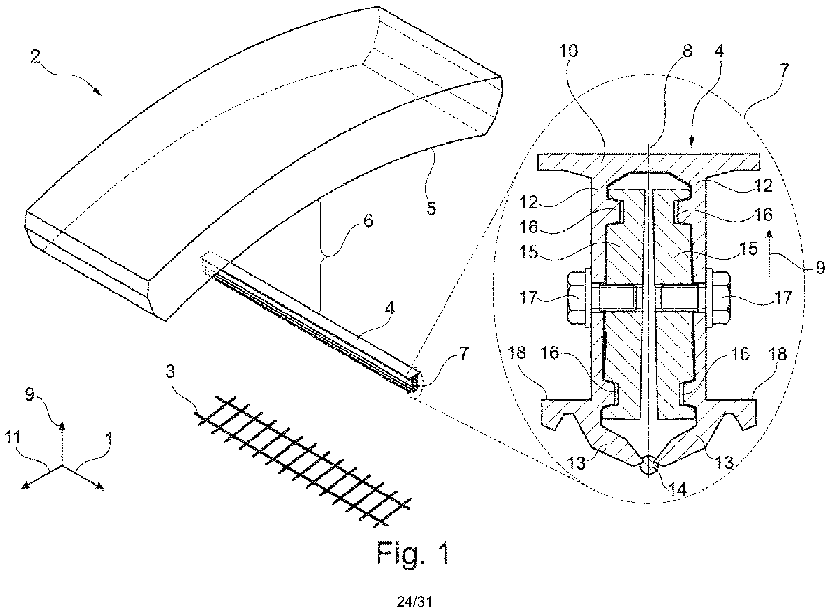

Es wird auf Fig. 1 Bezug genommen, die eine sich in einer Fahrtrichtung 1 erstreckende Fahrstrecke 2 mit einem Gleis 3 zeigt, auf der sich ein nicht gezeigter Zug elektrisch angetrieben und geführt durch das Gleis 3 bewegen kann. Zur elektrischen Energieversorgung des Zuges ist in einer nicht weiter referenzierten Höhe über dem Gleis 3 eine sich ebenfalls in der Fahrtrichtung 1 erstreckende Stromschiene 4 angeordnet, aus der der Zug mit einem nicht weiter dargestellten Pantographen elektrischen Strom in an sich bekannter Weise entnehmen kann.

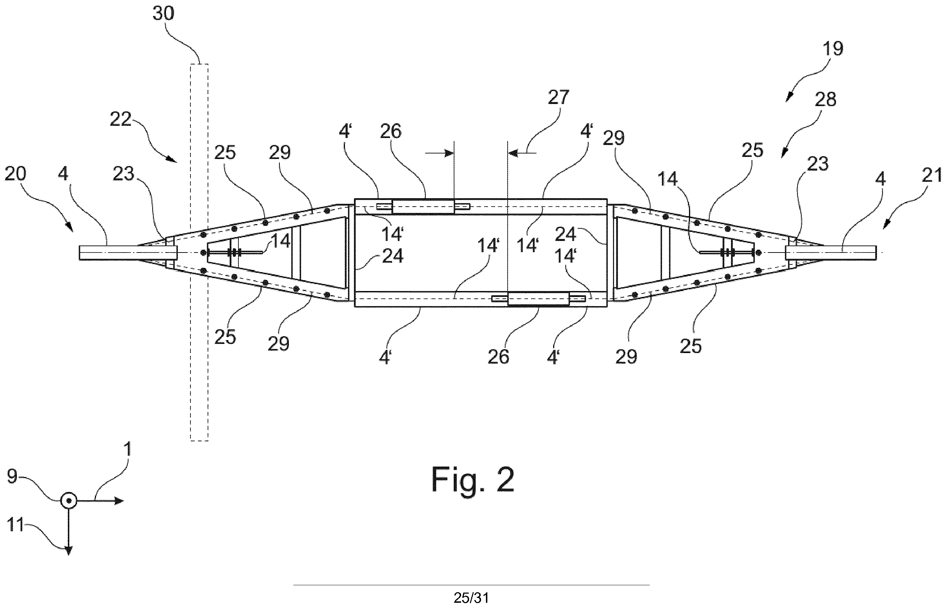

Die Stromschiene 4 ist an einem Träger aufgehängt, der in der Fig. 1 in Form einer Decke 5 dargestellt ist. Die Decke 5 könnte beispielsweise Teil eines Tunnels oder einer Brücke sein. Die Stromschiene 4 lässt sich über in Fig. 2 nicht weiter dargestellte Aufhängemittel in einem sehr geringen Aufhängeabstand 6 zur Decke 5 halten.

In Fig. 1 ist das Profil 7 der Stromschiene 4 vergrößert dargestellt.

Im Profil 7 gesehen ist die Stromschiene 4 achsensymmetrisch zu einer Profilachse 8 ausgebildet. Die Profilachse 8 verläuft dabei parallel zu einer Höhenrichtung 9 der Fahrstrecke 2. In der Höhenrichtung 9 gesehen befindet sich an der Oberseite der Stromschiene 4 ein Querarm 10, von dem sich in einer rechtwinklig zur Fahrtrichtung 1 und rechtwinklig zur Höhenrichtung 9 verlaufenden Querrichtung 11 gesehen, beabstandet zueinander zwei Spannarme 12 entgegen der Höhenrichtung 9 erstrecken. An das dem Querarm 10 gegenüberliegende Ende eines jeden Spannarms 12 schließt sich je ein Klemmarm 13 an, zwischen denen ein Fahrdraht 14, eingeklemmt durch die Spannarme 12, gehalten ist.

Die in Fig. 1 gezeigte Stromschiene 4 wird gewöhnlich aus einer Vielzahl an Stromschienenabschnitten zusammengesetzt, die im Profil 7 der Fig. 1 gesehen stirnseitig über Stoßlaschen 15 exakt aufeinander ausgerichtet aneinander gelegt werden. Die gegenseitige Ausrichtung erfolgt über einen in Höhenrichtung 9 wirkenden Formschluss zwischen den Stoßlaschen 15 und den Stromschienenabschnitten, der in Fig. 1 als Feder-Nut-Verbindung 16 ausgeführt ist. Zur Fixierung der einzelnen Stromschienenabschnitte gegeneinander lassen sich in die Stoßlaschen 15 Schrauben 17 einschrauben.

Um den Fahrdraht 14 zwischen den Klemmarmen 13 einzuklemmen, schließen sich an einer Verbindungsstelle zwischen dem Klemmarmen 13 und den Spannarmen 12 in beziehungsweise entgegen der Querrichtung 11 erstreckende Fahrstraßen 18 an, auf dem sich ein nicht weiter gezeigter Fädelwagen bewegen kann. Da dies zum Verständnis der Ausführung nicht weiter notwendig ist, soll auf eine tiefergehende Einführung hierzu verzichtet werden.

Es wird auf Fig. 2 Bezug genommen, die einen Streckentrenner 19 in einer schematischen Draufsicht zeigt.

Es ist bekannt, die Fahrleitung 14 aus Fig. 1 in Fahrtrichtung 1 elektrisch in verschiedene Abschnitte zu trennen, wobei der oben genannte Zug diese elektrischen Trennstellen passieren können muss. Der in Fig. 2 dargestellte Streckentrenner 19 verbindet die Stromschiene 4 eines ersten Leitungsabschnittes 20 mit der Stomschiene 4 eines zweiten Leitungsabschnittes 21.

In Fahrtrichtung 1 gesehen umfasst der Streckentrenner 19 eine erste Anschlussvorrichtung 22 mit einer Eingangskante 23 und einer in Fahrtrichtung 1 gesehen der Eingangskante 23 gegenüberliegenden Ausgangskante 24. Die Eingangskante 23 und die Ausgangskante 24 sind über Seitenkanten 25 miteinander verbunden. In der entgegen der Höhenrichtung 9 gesehenen Draufsicht besitzt die erste Anschlussvorrichtung 22 eine im Wesentlichen dreieckige oder trapezförmige Form.

Die Stromschiene 4 des ersten Leitungsabschnittes 20 ist an die Eingangskante 23 der ersten Anschlussvorrichtung 22 angeschlossen. Der durch die Stromschiene 4 des ersten Leitungsabschnittes 20 geführte Fahrdraht 14 ist in den Bereich der ersten Anschlussvorrichtung 22 hinein geführt. An die Ausgangskante 24 schließen sich in der Querrichtung 11 gesehen beabstandet zueinander angeordnete besondere Stromschienen an, die nachstehend mit dem Bezugszeichen 4' bezeichnet werden. Auf die Besonderheit dieser besonderen Stromschienen 4' wird an späterer Stelle näher eingegangen. An jede besondere Stromschiene 4' schließt sich in Fahrtrichtung 1 gesehen je eine Isolierkufe 26 an, die jeweils in Fahrtrichtung 1 gesehen mit einem Versatz 27 zueinander versetzt angeordnet ist. An jede Isolierkufe 26 schließt sich wiederum je eine besondere Stromschiene 4' an, wobei sich an diese besonderen Stromschienen 4' dann die Ausgangskante 24 einer zweiten Anschlussvorrichtung 28 anschließt. Die zweite Anschlussvorrichtung 28 ist in Fahrtrichtung 1 gesehen spiegelsymmetrisch zur ersten Anschlussvorrichtung 22 aufgebaut. An die Eingangskante 23 der zweiten Anschlussvorrichtung 28 schließt sich die Stromschiene 4 des zweiten Leitungsabschnittes 21 an.

In der Höhenrichtung 9 gesehen unterhalb der Anschlussvorrichtungen 22, 28 ist im Bereich jeder Seitenkante 25 ein Fahrdraht geführt, der in Abgrenzung zu den in den Stromschienen 4 gehaltenen Fahrdrähten 14 Verbindungsdraht 28 genannt wird. Die einzelnen Verbindungsdrähte 29 sind in Fig. 2 gestrichelt angedeutet. Ebenso sind in der Höhenrichtung 9 gesehen unterhalb der besonderen Stromschienen 4' Fahrdrähte gehalten, die zur klaren Abgrenzung gegenüber den Fahrdrähten 14 unterhalb der Stromschienen 4 in den Leitungsabschnitten 20, 21 mit dem Bezugszeichen 14' gekennzeichnet sind. Auch die Fahrdrähte 14' der besonderen Stromschienen 4' sind in Fig. 2 gestrichelt dargestellt.

Die Verbindungsdrähte 29 bilden zusammen mit den Fahrdrähten 14' der besonderen Stromschienen 4' Leitkufen 14', 29 aus, die elektrisch an die Fahrdrähte 4 der beiden Leitungsabschnitte 20, 21 angeschlossen sind. Die Isolierkufen 26 unterbrechen dabei die Leitkufen 14', 29 elektrisch. Fährt ein in Fig. 2 gestrichelt angedeuteter Panthograph 29 in Fahrtrichtung 1 in den Streckentrenner 19 ein, so bleibt der Pantograph 30 bis zum Erreichen der in Fahrtrichtung 1 gesehenen ersten Isolierkufe 26 mit dem ersten Leitungsabschnitt 20 elektrisch verbunden. Beim Passieren der ersten Isolierkufe 26 bleibt der Pantograph 40 im elektrischen Kontakt mit dem ersten Leitungsabschnitt 20 und bekommt nach dem Verlassen der ersten Isolierkufe 26 elektrischen Kontakt mit dem zweiten Leitungsabschnitt 21 innerhalb des Versatzes 27. Sobald der Pantograph 30 allerdings auch die in Fahrtrichtung 1 gesehene zweite Isolierkufe 26 passiert hat, verliert er den elektrischen Kontakt zum ersten Leitungsabschnitt 20 und hat nur noch elektrischen Kontakt zum zweiten Leitungsabschnitt 21. Der Streckentrenner 19 der Fig. 2 hat den Nachteil, dass im Bereich des Versatzes 27 der Pantograph 30 gleichzeitig beide Leitungsabschnitte 20, 21 kontaktiert. Besitzen die beiden Leitungsabschnitte 20, 21 unterschiedliche Spannungspotentiale, wie beispielsweise an einem Übergang zwischen zwei verschiedenen elektrischen Energieversorgungssystemen, so können im Bereich des Versatzes 27 Lichtbögen zwischen den beiden Leitungsabschnitten 20, 21 auftreten.

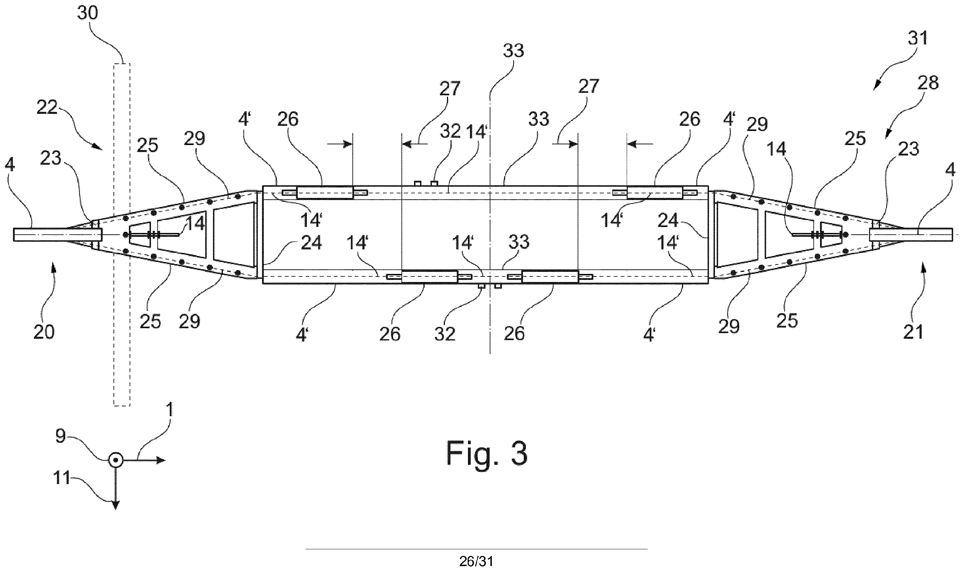

Zur Vermeidung eines Übertrittes von Lichtbögen zwischen den beiden Leitungssystemen 20, 31 im Falle unterschiedlicher Spannungspotentiale im Bereich des Versatzes 27, kann der Streckentrenner 19 in einfacher Weise zu einer in Fig. 3 gezeigten Schutzstrecke 31 umkonfiguriert werden.

Die Schutzstrecke 31 weist ausgehend vom ersten Leitungsabschnitt 20 bis zu den beiden Isolierkufen 26 die gleiche Konfiguration auf, wie der Streckentrenner 19. An die beiden Isolierkufen 26 schließen sich allerdings zwei Stromschienen mit Erdungsanschlüssen 32 an, die den unter der Stromschiene getragenen Fahrdraht 14' erden. Diese Stromschienen werden daher nachstehend Erdungsschienen 33 genannt. Hierbei ist die Erdungsschiene 33, die in den Bereich des Versatzes 27 der beiden Isolierkufen 26 hineinragt, in Fahrtrichtung 1 gesehen länger als die andere Isolierkufe 26. Die Erdungsschienen 33 verlaufen dann weiter in Fahrtrichtung 1 bis zu einer Symmetrieachse 34, zu der die Schutzstrecke 31 achsensymmetrisch aufgebaut ist.

Der in Fahrtrichtung 1 in die Schutzstrecke 31 eintretende Panthograph 30 passiert bis zum Erreichen des Bereiches des in Fahrtrichtung 1 gesehenen ersten Versatzes 27 die gleichen Elemente, wie im Streckentrenner 19. Im Bereich der Versätze 27 überschneiden sich allerdings nun nicht die Leitungssysteme 20, 21, sondern es überschneidet sich je ein Leitungssystem 20, 21 mit einer der Erdungsschienen. Auf diese Weise wird vermieden, dass der oben genannte Lichtbogen zwischen den beiden Leitungssystemen 20, 21 übertritt.

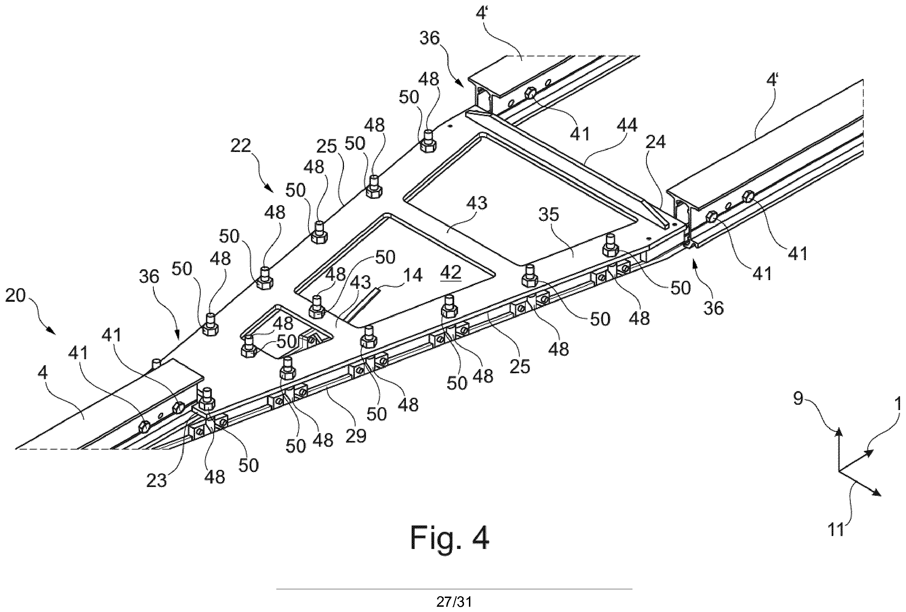

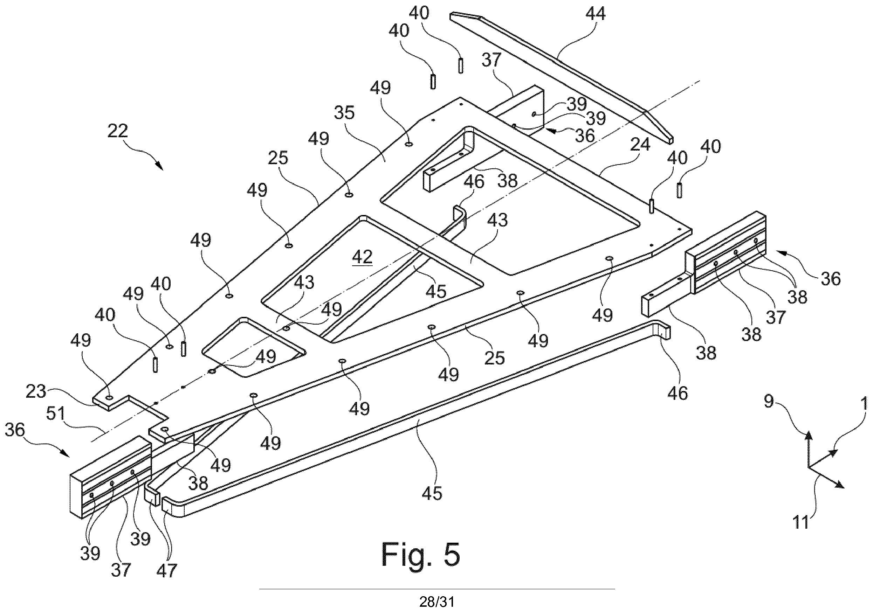

Nachstehend wird auf den Streckentrenner 19 und die Schutzstrecke 31 im Bereich der Anschlussstücke 22, 28 näher eingegangen. Hierzu wird auf Fig. 4, die den Streckentrenner 19 und die Schutzstrecke 31 im Bereich des in Fahrtrichtung 1 gesehenen ersten Anschlussstückes 22 zeigt, sowie Fig. 5, die einen Teil des Anschlussstücks 22 aus Fig. 4 in einer Explosionsansicht zeigt, Bezug genommen.

Das Anschlussstück 22 besitzt eine Platte 35, die durch die Eingangskante 23, sie Ausgangskante 24 und di ebeiden Seitenkanten 25 begrenzt ist. An der Eingangskante 23 und an der Ausgangskante 24 sind Steckelemente 36 befestigt, die in die Stromschienen 4, 4' eingeführt sind, um die Stromschienen 4, 4' am Anschlussstück 22 zu halten. Das Steckelement 36 an der Eingangskante ist dabei in der Perspektive der Fig. 4 nicht zu sehen. Jedes Steckelement 36 umfasst einen Steckkörper 37 und Befestigungskörper 38. Beide Körper 37, 38 sind fest miteinander verbunden. Der Steckkörper 37 ist im an den Stromschienen 4, 4' gehaltenen Zustand in die Stromschienen 4, 4' eingeführt und weist sich in und entgegen der Querrichtung 11 erstreckende Einschrauböffnungen 39 auf. Der Befestigungskörper 37 ist an der Ausgangskante 24 auf eine in der Höhenrichtung 9 gesehene Unterseite der Platte 35 aufgesetzt und mit durch die Platte 35 in den Befestigungskörper 38 getriebenen Bolzen 40 an der Platte 35 befestigt. Auf diese Weise wird jedes Steckelement 36 fest am Anschlussstück 22 gehalten. Zur Lagefixierung der Stromschienen 4, 4' am Anschlussstück 22 sind durch die Stromschienen 4, 4' Schrauben 41 in die Einschrauböffnungen 39 der Steckelemente 35 eingeschraubt.

Die Platte 35 weist mittig eine Ausnehmung 42 auf, durch die drei die Seitenkanten 25 verbindende Streben 43 verlaufen. Ferner ist die Platte 35 an der Ausgangskante 24 mit einer zwischen den Seitenkanten 25 verlaufenden Querrippe 44 verstärkt. Diese Querrippe 44 kann in beliebiger Weise an der Platte 35 befestigt werden, beispielsweise durch Verschweißen. Die Querrippe 44 verläuft winklig zur Längsrichtung 1, in der vorliegenden Ausführung senkrecht dazu. Ferner sind an der Platte 35 auf der der Querrippe 44 gegenüberliegenden Seite zwei Längsrippen 45 befestigt. Die Längsrippen 45 können in der gleichen Weise an der Platte 35 befestigt werden, wie die Querrippe 44. Die Längsrippen 45 verlaufen winklig zur Querrippe 44. In der vorliegenden Ausführung verlaufen die Längsrippen 45 parallel zu den Seitenkanten 25 und sind an ihrem in der Fahrtrichtung 1 gesehenen vorderen Längsrippenende 46 und hinteren Längsrippenende 47 in und entgegen der Querrichtung 11 abgebogen. Durch die Streben 43, die Querrippe 44 und die Längrippen 45 lässt sich das Anschlussstück 22 mit einem geringen Gewicht einerseits und einer hohen mechanischen Stabilität andererseits realisieren.

Die Verbindungsdrähte 29 und der Fahrdraht 14 sind in Höhenrichtung 9 gesehen unterhalb der Platte 37 mittels Halteelementen 48 gehalten. Die Halteelemente 48 sind durch Durchgangsöffnungen 49 die Platte 37 geführt und auf der Oberseite der Platte 37 mit Haltemuttern 50 gehalten. Im Einzelnen sind die die Verbindungsdrähte 29 tragenden Halteelemente 48 und somit ihre entsprechenden Durchgangsöffnungen 49 durch die Platte 35 entlang der Seitenkanten 25 angeordnet, während die den aus dem ersten Leitungsabschnitt 20 kommenden Fahrdraht 14 tragenden Halteelemente 48 und somit ihre entsprechenden Durchgangsöffnungen mittig zwischen den beiden Seitenkanten 25 angeordnet sind. Auf diese Weise werden die Wirkungen durch Hebelmomente um eine sich in Fahrtrichtung 1 erstreckende Achse reduziert. Um diese Wirkungen durch Hebelmomente weiter zu reduzieren, ist die Platte 35 achsensymmetrisch zu einer in Fahrtrichtung 1 ausgerichteten Plattensymmetrieachse 51 ausgebildet.

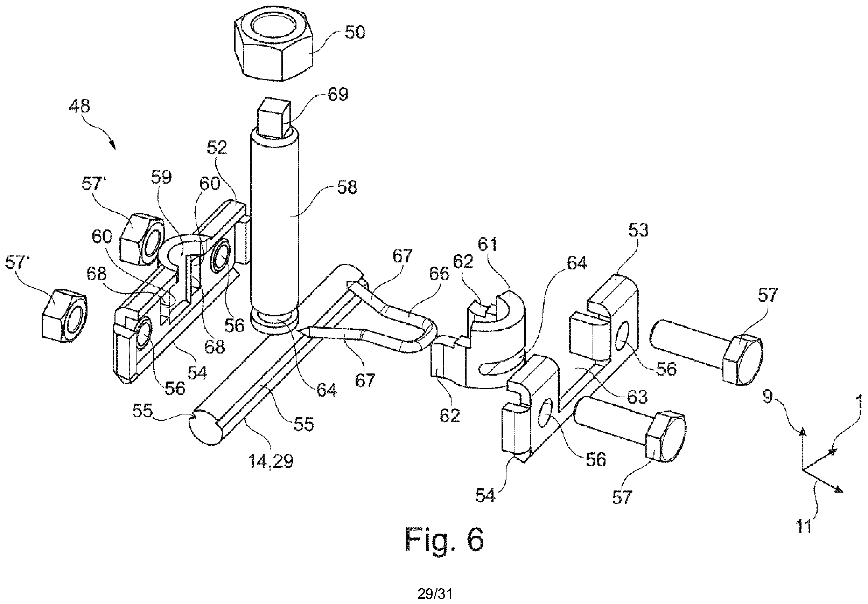

Ein Beispiel für die Halteelemente 48 ist in Fig. 6 detailliert in einer Explosionsdarstellung gezeigt.

Das Halteelement 48 klemmt den Fahrdraht 4, 29 zwischen einer ersten Klemmbacke 52 und einer zweiten Klemmbacke 53 ein. Hierzu weisen beiden Klemmbacken 52, 53 an ihrer in der Höhenrichtung 9 gesehenen Unterseite je einen sich in Richtung des Fahrdrahtes 4, 29 erstreckenden Eingriffszahn 54 auf, der an sich bekannte Fahrdrahtnuten 55 des Fahrdrahtes 4, 29 eingreifen kann, um den Fahrdraht 4, 29 entgegen der Höhenrichtung 9 formschlüssig zu halten. Zur Herstellung des Formschlusses werden die beiden Klemmbacken 52, 53 über zwei durch entsprechende Durchführöffnungen 56 in den Klemmbacken 52, 53 durchführbare Verschlussschrauben 57 und zwei Verschlussmuttern 57' gegeneinander verschraubt. Die Durchführöffnungen 56 sind rechtwinklig zum Fahrdraht 4, 29 geführt, so dass der Eingriff der Eingriffszähne 54 in die Nuten 55 entsprechend rechtwinklig zum Formschluss erfolgt.

Zur Befestigung des Halteelements 48 an der Platte 35 ist im Halteelement 48 ein Verbindungsstab 58 vorhanden. Der Verbindungsstab 58 wird in eine Mulde 59 an der ersten Klemmbacke 52 gelegt. In der Höhenrichtung 9 gesehen links und rechts der Mulde 59 sind durch die erste Klemmbacke 52 Eingriffsschlitze 60 geführt, in die an einem Gegenstück 61 ausgebildete Eingriffsfüße 62 eingreifen können. Greifen die Eingriffsfüße 62 in die Eingriffsschlitze 60 ein, schließt das Gegenstück 61 die Mulde 59 in der ersten Klemmbacke 52 zu einem kreisförmigen Kanal. Damit das Gegenstück 61 nahe genug an die erste Klemmbacke 52 herangeführt werden kann, in der zweiten Klemmbacke 53 eine Aussparung 63 ausgebildet, in der das Gegenstück 61 aufnehmbar ist.

Der Verbindungsstab 58 weist an seiner in der Höhenrichtung 9 gesehenen Unterseite eine umlaufende Kerbe 64 auf. Ferner weist das Gegenstück 61 einen sich in Richtung des Fahrdrahtes 4, 29 erstreckenden Durchgangsschlitz 65 auf. Die Kerbe 64 und der Durchgangsschlitz 65 sind derart angeordnet, dass wenn der Verbindungsstab 58 auf einen Boden der Mulde 59 an der ersten Klemmbacke 52 gelegt und das Gegenstück 61 mit seinen Eingriffsfüßen 62 in die Eingriffsschlitze 60 an der ersten Klemmbacke 52 eingesetzt ist, der Durchgangsschlitz 65 plan auf der umlaufenden Kerbe 64 liegt. Auf diese Weise lässt sich durch den Durchgangsschlitz 65 und die Kerbe 64 hindurch eine Sicherungsfeder 66 führen, die die Klemmbacken 52, 53 in der Höhenrichtung 9 formschlüssig am Verbindungsstab 58 hält. Die Sicherungsfeder 66 weist zur ersten Klemmbacke 52 richtbare Federbeine 67 auf, die im montierten Zustand des Halteelements 48 beide vom

Verbindungsstab 58 weggerichtet sind. Um diese Federbeine 67 durch die erste Klemmbacke 52 hindurch zu führen, sind in den Eingriffsschlitzen 60 entsprechende Aufnahmenuten 68 ausgebildet. Die Federbeine 67 der Sicherungsfeder 66 drücken so im montierten Zustand des Halteelements 48 die Eingriffsfüße 62 aus Sicht des Verbindungsstabes 58 weg von diesem und sichern so das Gegenstück 61 an der ersten Klemmbacke 52.

Zur Montage des Streckentrenners 19 oder der Schutzstrecke 31 werden zunächst die Halteelemente 48 in der zuvor beschriebenen Weise an die Fahrleitung 14, 29 angelegt und zusammengesetzt. Dabei bleiben die beiden Klemmbacken 52, 53 locker, so dass zwar der sich Fahrdraht 14, 29 nicht mehr aus den beiden Eingriffszähnen 54 in und entgegen der Höhenrichtung 9 herauslösen allerdings noch in und entgegen der Richtung des Fahrdrahtes 14, 29 verschieben lässt. Anschließend werden die Verbindungsstäbe 58 der Halteelemente 14, 29 durch die Durchgangsöffnungen 49 von der Unterseite der Platte 35 zur Oberseite geführt und dort mit den Haltemuttern 50 verschraubt. In diesem Zustand können die Halteelemente 48 millimetergenau positioniert und der Abstand des Fahrdrahtes 14, 29 zur Platte 35 millimetergenau eingestellt sowie mit dem Haltemuttern 50 und den Verschlussmuttern 57' fixiert werden. Da sich die Verbindungsstäbe 58 allerdings aufgrund fehlender Formschlüsse im Umfangsrichtung in den Halteelementen 48 drehen können, sind zur Verschraubung an der Kerbe 64 gegenüberliegenden Ende jedes Verbindungsstabes 58 ein Werkzeugformschlusselement 69 ausgebildet. An dieses Werkzeugformschlusselement 69 kann ein Werkzeug wie ein Schraubendreher oder ein Schraubenschlüssel angreifen.

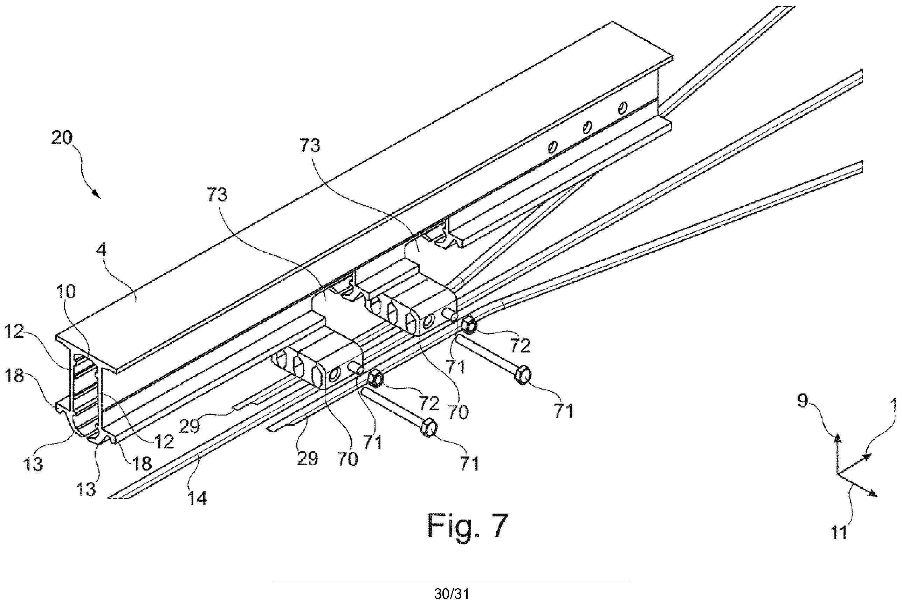

Die mechanische Verbindung der Stromschienen 4, 4' mit den Anschlusstücken 22, 28 erfolgt über die Steckelemente 36 an den Anschlussstücken 22, 28, die in die Stromschienen 4, 4' eingeführt werden. Nachstehend wird zur Vervollständigung noch die elektrische Kontaktierung zwischen den Verbindungsdrähten 29 und den Fahrdrähten 4 im Bereich der Eingangskanten 23 der Anschlussstücke 22, 28 beschrieben. Diese erfolgt in der vorliegenden Ausführung auf Seiten der an die Anschlussstücke 22, 28 angeschlossenen Stromschienen 4. Zur weiteren Erläuterung wird auf Fig. 7 hierzu Bezug genommen, die die Stromschiene 4 zeigt, welche in Fahrtrichtung 1 betrachtet an die Eingangskante 23 des ersten Anschlussstückes 22 anschließt.

Die in das Anschlussstück 22 eintretenden Verbindungsdrähte 29 werden gemeinsam mit dem aus dem ersten Leitungssystem 20 kommenden Fahrdraht 14 über ein Klemmbackenpacket 70 miteinander verbunden. Das Klemmbackenpacket 70 besteht aus mehreren nicht weiter referenzierten Klemmbacken, die genauso wirken, wie die Klemmbacken 52, 53 des Halteelements 48. Das gesamte Klemmbackenpacket 70 wird mit Paketschrauben 71 und Packetmuttern 72 zusammengehalten und klemmt so auch die Fahrdrähte 14, 29 ein. Auf eventuell notwendige Unterlegscheiben und/oder Federringe wurde der Übersichtlichkeit halber verzichtet.

Nachdem die Fahrdrähte 14, 29 in den Klemmpacketen 70 aufgenommen und fixiert sind, werden sie in eine Klemmpacketnut 73 in der Stromschiene 4 eingesetzt. Da der Fahrdraht 4 aus dem entsprechenden Leitungssystem 20, 21 zwischen den Klemmarmen 13 gehalten wird, ist eine weitere fixierung des Klemmpacketes 70 innerhalb der Klemmpacketnut 73 nicht weiter notwendig.

Abschließend wird noch auf die Fixierung der Isolierkufen 26 aus den Fig. 2 und 3 näher eingegangen. Die Isolierkufen 26 trennen wie bereits beschrieben den elektrischen Kontakt zwischen den beiden Leitungssystemen 20, 21. Allerdings sollen die Isolierkufen 26 auch gemeinsam mit der Stromschienen 4' zwischen den beiden Anschlussstücken 22, 28 einen mechanischen Kontakt des Panthographen 30 mit dem Streckentrenner 19 respektive der Schutzstrecke 31 sicherstellen, um eine hohe Qualität der Stromabnahme auch bei sehr hohen Geschwindigkeiten sicherzustellen. Im Bereich des Anschlussstückes 22, 28 lässt sich der mechanische Kontakt durch die exakte Ausrichtung der Fahrdrähte 14, 29 über die Halteelemente 48 sicherstellen. In einer Kontaktstrecke 47 zwischen den Anschlussstücken 22, 28, die aus einer Aneinanderreihung von Stromschienen 4' und Isolierkufen 29 gebildet ist, ist allerdings kein Träger als Referenz vorhanden, an dem sich die einzelnen Elemente exakt ausrichten lassen.

Aus diesem Grund werden auf der Kontaktstrecke 74 die einzelnen Elemente gegeneinander ausgerichtet. Zur Ausrichtung umfassen die Stromschienen 4' in der Kontaktstrecke 74 dort, wo eine Isolierkufe 26 angeschlossen werden soll, einen in den Querarm 10 eingeformten Längsschlitz 75. In Höhenrichtung 9 gesehen unterhalb des Längsschlitzes 75 sind in die Stromschiene 4' Führungsplatten 76 eingesetzt, die mit Ihrer zur Wand der Stromschiene 4' gerichteten Seite 77 die selbe Feder-Nut-Verbindung 16 mit der Stromschiene 4' eingehen können, wie die eingangs genannten Stoßlaschen 15. Auf der anderen Seite 78 der Führungsplatten 76 befinden sich in Höhenrichung 9 parallel verlaufende Führungsschienen 79. Sowohl durch die Führungsplatten 76 als auch durch die Enden der Stromschienen 4', mit dem Längsschlitz 75 im Querarm 10 sind Durchgangsbohrungen 80 geführt, durch die Fixierschrauben 81 geführt und mit Fixiermuttern 82 festgezogen werden können.

Die Isolierkufen 26 besitzen einen plattenförmigen Stab 83 dessen Enden Führungsnuten 84 aufweisen, in die sich die Führungsschienen 79 der Führungsplatten 76 einsetzen lassen. In Höhenrichtung 9 gesehen befinden sich links und rechts von den Führungsnuten 84 in der Höhenrichtung 9 verlaufende Langlöcher 85. Zur Montage werden die Führungsnuten 84 eines der plattenförmigen Stäbes 83 in die Führungsschienen 79 einer der Stromschienen 4' über den Längsschlitz 75 eingesetzt und in die entsprechende Stromschiene 4' hineingeschoben, bis sich die Langlöcher 85 mit den Durchgangsbohrungen 80 decken. Dann wird durch die Durchgangsbohrungen 80 und die Langlöcher 85 die Fixierschraube 81 geführt. Anschließend lässt sich eine Unterkante 86 des plattenförmigen Stabes 83 exakt mit dem Fahrdraht 14' der entsprechenden Stromschiene 4' ausrichten. In diesem ausgerichteten Zustand lässt sich dann die Lage der entsprechenden Isolierkufe 26 relativ zur entsprechenden Stromschiene 4' durch Festziehen der Fixierschraube 81 und der Fixiermutter 82 fixieren.

Zur Steigerung der Knickfestigkeit kann auf die der Unterkante 86 gegenüberliegende Oberkante des plattenförmigen Stabes 83 eine Verstärkungsplatte 87 aufgesetzt und mit Sicherungsschrauben 88 fixiert werden.

## Patentansprüche

1. Anschlussstück (22, 28) zum Überführen eines Strom aus einem Fahrdraht (14) abnehmenden Pantographen (30) eines auf einem Gleis (3) in einer Fahrtrichtung (1) fahrenden Zuges vom Fahrdraht (14) auf eine Leitkufe (14') und eine parallel zur Leitkufe (14') verlaufenden Isolierkufe (26) in einem Streckentrenner (19) oder einer Schutzstrecke (31), **gekennzeichnet durch:**
- eine planparallel zum Gleis (3) anordenbare Platte (35) mit einer in Fahrtrichtung (1) gesehenen vom Streckentrenner (19) oder von der Schutzstrecke (31) wegrichtbaren Eingangskante (23) zum Anschluss einer ersten den Fahrdraht (14) tragenden ersten Stromschiene (4) und mit einer in Fahrtrichtung (1) gesehen auf den Streckentrenner (19) oder auf die Schutzstrecke (31) zurichtbaren Ausgangskante (24) zum Anschluss einer die Leitkufe (14') tragenden zweiten Stromschiene (4') und beabstandet davon einer die Isolierkufe (26) haltenden dritten Stromschiene (4'),
- ein an einer zum Gleis (3) richtbaren Unterseite der Platte (35) angeordnetes erstes Halteelement (48) zum Tragen eines von der ersten Stromschiene (4) zur zweiten Stromschiene (4') führenden ersten Verbindungsdrahtes (29) in einem einstellbaren ersten Abstand zur Platte (35), und
- ein an der Unterseite der Platte (35) angeordnetes zweites Halteelement (48) zum Tragen eines von der ersten Stromschiene (4) zur dritten Stromschiene (4') führenden zweiten Verbindungsdrahtes (29) in einem einstellbaren zweiten Abstand zur Platte (35).

2. Anschlussstück (22, 28) nach Anspruch 1, wobei die Halteelemente (48) je zwei über ein erstes Befestigungselement (57, 57') verschließbare Klemmbacken (52, 53) umfassen, die über ein zweites Befestigungselement (64, 66) an einem zur Platte (35) führenden Verbindungsstab (58) befestigt sind.

3. Anschlussstück (22, 28) nach Anspruch 2, wobei die beiden Befestigungselemente (57, 57'; 64, 66) voneinander unabhängig wirken.

4. Anschlussstück (22, 28) nach einem der vorstehenden Ansprüche, wobei die Platte (35) mittig eine Aussparung (42) aufweist und die beiden Halteelemente (48) auf gegenüberliegenden Seiten (25) der Aussparung (42) zwischen der Eingangskante (23) und der Ausgangskante (24) angeordnet sind.

5. Anschlussstück (22, 28) nach einem der vorstehenden Ansprüche, umfassend eine auf der Platte (35) stehende und sich winklig zur Fahrtrichtung erstreckende Querrippe (44) und/oder eine auf der Platte (35) stehende sich winklig zur Ausgangskante (24) erstreckende Längsrippe (45).

6. Anschlussstück (22, 28) nach Anspruch 5, wobei die Rippen (44, 45) auf unterschiedlichen Seiten der Platte (35) stehen.

7. Anschlussstück (22, 28) nach einem der vorstehenden Ansprüche, umfassend sich in und entgegen der Fahrtrichtung (1) erstreckende Steckelemente (36) an der Eingangskante (23) und der Ausgangskante (24) zum Einführen in die Stromschienen (4, 4').

8. Stromschiene (4') zum Anschließen an ein Anschlussstück (22, 28) nach einem der vorstehenden Ansprüche, umfassend einen sich in Fahrtrichtung (1) erstreckenden Querarm (10) und zwei beabstandet voneinander vom Querarm (10) abragende Spannarme (12), zwischen denen der Fahrdraht (14') einklemmbar ist, wobei der Querarm (10) einen sich von einem Ende der Stromschiene (4') in Fahrrichtung (1) erstreckenden Schlitz (75) umfasst, über den in die Stromschiene (4') eine Isolierkufe (26) einsetzbar ist.

9. Stromschiene (4') nach Anspruch 8, wobei an den Spannarmen (12) aufeinander zu gerichtet winklig zum Schlitz (75) Führungselemente (79) angeordnet sind, die die Isolierkufe (26) beim Einsetzen in die Stromschiene (4') führen.

10. Stromschiene (4') nach Anspruch 9, wobei die Führungselemente (79) an Führungsplatten (76) ausgebildet sind, die an die Spannarme (12) anlegbar sind.

11. Stromschiene (4') nach einem der vorstehenden Ansprüche 8 bis 10, wobei sich der Schlitz (75) ausgehend vom Ende der Stromschiene (4') zumindest bereichsweise verjüngt.

12. Isolierkufe (26) zum Einsetzen in eine Stromschiene (4') nach einem der vorstehenden Ansprüche 8 bis 11, umfassend einen sich in Fahrtrichtung (1) erstreckenden plattenförmigen Stab (83) mit einem in Fahrtrichtung gesehenen Ende, an welchem Formschlusselemente (84) für einen Führungsformschluss mit den Führungselementen (79) an der Stromschiene (4') beim Einsatz in den Schlitz (75) der Stromschiene (4') ausgebildet sind.

13. Isolierkufe (26) nach Anspruch 12, umfassend eine Verstärkungsplatte (87), die in einer Höhenrichtung (9) gesehen auf den plattenförmigen Stab (83) zumindest bereichsweise aufgesetzt ist.

14. Streckentrenner (19) umfassend zwei mit ihren Ausgangskanten (24) aufeinander zu gerichtete Anschlussstücke (22, 28) nach einem der Ansprüche 1 bis 7 und zwei parallel zueinander verlaufende die Ausgangskanten (24) miteinander verbindende Kontaktstrecken (74) mit je zwei Stromschienen (4') nach einem der Ansprüche 8 bis 11, deren geschlitzte Querarme (10) aufeinander zu gerichtet sind und zwischen denen je eine Isolierkufe (26) nach einem der Ansprüche 12 oder 13 gehalten ist, wobei die Isolierkufen (26) der beiden Kontaktstrecken (74) in Fahrtrichtung (1) gesehen versetzt zueinander angeordnet sind.

15. Schutzstrecke (31) umfassend zwei mit ihren Ausgangskanten (24) aufeinander zu gerichtete Anschlussstücke (22, 28) nach einem der Ansprüche 1 bis 7 und zwei parallel zueinander verlaufende die Ausgangskanten (24) miteinander verbindende Kontaktstrecken (74) mit je zwei Stromschienen (4') nach einem der Ansprüche 8 bis 11, deren geschlitzte Querarme (10) aufeinander zu gerichtet sind und zwischen denen je zwei Isolierkufen (26) nach einem der Ansprüche 12 oder 13 gehalten sind, wobei die Isolierkufen (26) der beiden Kontaktstrecken (74) in Fahrtrichtung (1) gesehen versetzt zueinander angeordnet und durch je eine weitere Stromschiene (4') verbunden sind, die sich in Fahrtrichtung (1) überlappen.

## Claims

1. Connecting device (22, 28) for transferring a current from a contact wire (14) tapping pantograph (30) of a train travelling on a track (3) in a direction of travel from the contact wire (14) to a conductive runner (14') and an isolating runner (26) extending parallel to the conductive runner (14') in a section isolator (19) or a neutral section (31), **characterized by**:
- a plate (35) that can be arranged plane-parallel to the track (3) having an input edge (23) that can be directed away from the section isolator (19) or from the neutral section (31) when viewed in the direction of travel (1) in order to connect a first conductor rail (4) carrying the first contact wire, and an output edge (24) that can be directed toward the section isolator (19) or to the neutral section (31), when viewed in the direction of travel (1), in order to connect a second conductor rail (4') carrying the conductive runner(14') and, at a distance therefrom, a third conductor rail (4') holding the isolating runner (26),
- a first holding element (48) arranged on an underside of the plate (35), which underside can be directed toward the track (3), for carrying a first connection wire (29) leading from the first conductor rail (4) to the second conductor rail (4') at an adjustable distance to the plate (35), and
- a second holding element (48) arranged on the underside of the plate (35) for carrying a second connection wire (29) leading from the first conductor rail (24) to the third conductor rail (4') at an adjustable distance to the plate (35).

2. Connection piece (22, 28) according to claim 1, wherein the holding elements (48) each comprise two clamping jaws (52, 53) which can be closed via a first fastening element (57, 57') and are fastened via a second fastening element (64, 66) to a connecting rod (58) leading to the plate (35).

3. Connection piece (22, 28) according to claim 2, wherein the two fastening elements (57, 57'; 64, 66) act independently of each other.

4. Connection piece (22, 28) as claimed in one of the preceding claims, wherein the plate (35) has a recess (42) in the middle, with the two holding elements (48) located on opposite sides (25) of the recess (42) between the input edge (23) and the output edge (24).

5. Connection piece (22, 28) as claimed in one of the preceding claims, comprising a transverse rib (44) standing on the plate (35) and extending at an angle to the direction of travel and/or a longitudinal rib (45) standing on the plate (35) and extending at an angle to the output edge (24).

6. Connection piece (22, 28) according to claim 5, wherein the ribs (44, 45) stand on different sides of the plate (35).

7. Connection piece (22, 28) as claimed in one of the preceding claims, comprising plug-in elements (36) extending in and against the direction of travel (1) at the input edge (23) and the output edge (24) for insertion into the conductor rails (4, 4').

8. Conductor rail (4') for connection to a connection piece (22, 28) as claimed in one of the preceding claims, comprising a transverse arm (10) extending in the direction of travel (1) and two clamping arms (10) projecting from the transverse arm (10) at a distance from one another, between which the contact wire (14') can be clamped, the transverse arm (10) comprising a slot (75) extending from one end of the conductor rail (4') in the direction of travel (10), via which slot (75) an isolating runner (26) can be inserted into the conductor rail (4').

9. Conductor rail (4') according to claim 8, wherein guide elements (79) are arranged on the clamping arms (12) directed towards each other at an angle to the slot (75), which guide the isolating runner (26) when inserted into the conductor rail (4').

10. Conductor rail (4') according to claim 9, wherein the guide elements (79) are executed on guide plates (76), which can be placed against the clamping arms (12).

11. Conductor rail (4') as claimed in one of the preceding claims 8 to 10, wherein the slot (75) tapers at least partially starting from the end of the conductor rail (4').

12. Isolating runner (26) for insertion into one of the conductor rails (4') as claimed in one of the preceding claims 8 to 11, comprising a plate-shaped rod (83) extending in the direction of travel (1) and having an end as viewed in the direction of travel (1), on which interlocking elements (84) are formed for a guide form-fit with the guide elements (79) on the conductor rail (4') when inserted into the slot (75) of the conductor rail (4').

13. Isolating runner (26) according to claim 12, comprising a reinforcing plate (87) which, when viewed in a vertical direction (9), is placed on the plate-shaped bar (83) at least in some areas.

14. Section isolator (19) comprising two connecting pieces (22, 28) which are directed towards one another with their outlet edges (24) according to one of claims 1 to 7 and two contact sections (74) which run parallel to one another and connect the outlet edges (24) to one another and each having two conductor rails (4') according to one of claims 8 to 11, whose slotted transverse arms (10) are directed towards one another and between each of which an isolating runner (26) is held in accordance with one of claims 12 or 13, wherein the isolating runner (26) of the two contact sections (74) are arranged offset from one another when viewed in the direction of travel (1).

15. Neutral section (31) comprising two connecting pieces (22, 28) which are directed towards one another with their outlet edges (24) according to one of claims 1 to 7 and two contact sections (74) which run parallel to one another and connect the outlet edges (24) to one another and each having two conductor rails (4') according to one of claims 8 to 11, whose slotted transverse arms (10) are directed towards one another and between each of which two isolating runners (26) are held in accordance with one of claims 12 or 13, wherein the isolating runners (26) of the two contact sections (74) are arranged offset from one another when viewed in the direction of travel (1) and are each connected by a further conductor rail (4') which overlap in the direction of travel (1).

## Revendications

1. Pièce de liaison (22, 28) pour le transfert d'un courant d'un pantographe (30), qui reçoit le courant d'un fil de contact (14), d'un train circulant sur une voie (3) dans un sens de marche (1) selon le fil de contact (14), à un rail de guidage (14') et à un patin isolant (26) qui fonctionne parallèlement au rail de guidage (14'), dans un isolateur de section (19) ou un tronçon de protection (31), **caractérisé par**:
- une plaque (35) pouvant être disposée dans un plan parallèle à la voie (3), avec un bord d'entrée (23) pouvant être éloigné de l'isolateur de section (19) ou du tronçon de protection (31), vu dans le sens de la marche (1), pour le raccordement d'un premier rail conducteur (4) portant le fil de contact (14), et avec un bord de sortie (24), qui peut être dirigé vers l'isolateur de section (19) ou vers le tronçon de protection (31), vu dans le sens de la marche (1), pour le raccordement d'un deuxième rail conducteur (4') portant le rail de guidage (14') et, à distance de celui-ci, d'un troisième rail conducteur (4') maintenant le patin isolant (26),
- un premier élément de maintien (48) disposé sur une face inférieure de la plaque (35), qui peut être orienté vers la voie (3), pour porter un premier fil de connexion (29) menant du premier rail conducteur (4) au deuxième rail conducteur (4') à une première distance réglable de la plaque (35), et
- un second élément de maintien (48) disposé sur la face inférieure de la plaque (35) pour porter un second fil de connexion (29) menant du premier rail conducteur (4) au troisième rail conducteur (4') à une seconde distance réglable de la plaque (35).

2. Pièce de liaison (22, 28) selon la revendication 1, dans laquelle les éléments de maintien (48) comprennent chacun deux mâchoires de serrage (52, 53) qui peuvent être fermées au moyen d'un premier élément de fixation (57, 57') et qui sont fixées au moyen d'un deuxième élément de fixation (64, 66) à une tige de liaison (58) menant à la plaque (35).

3. Pièce de liaison (22, 28) selon la revendication 2, dans laquelle les deux éléments de fixation (57, 57' ; 64, 66) agissent indépendamment l'un de l'autre.

4. Pièce de liaison (22, 28) selon l'une quelconque des revendications précédentes, dans laquelle la plaque (35) présente un évidement (42) au milieu et les deux éléments de retenue (48) sont disposés sur des côtés opposés (25) de l'évidement (42) entre le bord d'entrée (23) et le bord de sortie (24).

5. Pièce de liaison (22, 28) selon l'une quelconque des revendications précédentes, comprenant une nervure transversale (44) se dressant sur la plaque (35) et s'étendant en angle par rapport au sens de la marche et/ou une nervure longitudinale (45) se dressant sur la plaque (35) et s'étendant en angle par rapport au bord de sortie (24).

6. Pièce de liaison (22, 28) selon la revendication 5, dans laquelle les nervures (44, 45) se trouvent sur des côtés différents de la plaque (35).

7. Pièce de liaison (22, 28) selon l'une quelconque des revendications précédentes, comprenant des éléments enfichables (36) s'étendant dans et à l'opposé du sens de la marche (1) au niveau du bord d'entrée (23) et du bord de sortie (24) pour l'insertion dans les rails conducteurs (4, 4').

8. Rail conducteur (4') pour le raccordement à une pièce de liaison (22, 28) selon l'une quelconque des revendications précédentes, comprenant un bras transversal (10) s'étendant dans le sens de la marche (1) et deux bras de serrage (12) faisant saillie du bras transversal (10) à distance l'un de l'autre, entre lesquels le fil de contact (14) peut être serré, dans lequel le bras transversal (10) comprend une fente (75) s'étendant dans le sens de la marche (1) depuis une extrémité du rail conducteur (4'), fente (75) par laquelle un patin isolant (26) peut être inséré dans le rail conducteur (4').

9. Rail conducteur (4') selon la revendication 8, dans lequel des éléments de guidage (79) sont disposés sur les bras de serrage (12) en formant un angle par rapport à la fente (75), lesquels guident le patin isolant (26) lorsqu'il est inséré dans le rail conducteur (4').

10. Rail conducteur (4') selon la revendication 9, dans lequel les éléments de guidage (79) sont formés sur des plaques de guidage (76) qui peuvent être placées contre les bras de serrage (12).

11. Rail conducteur (4') selon l'une quelconque des revendications précédentes 8 à 10, dans lequel la fente (75) se rétrécit au moins dans certaines zones en partant de l'extrémité du rail conducteur (4').

12. Patin isolant (26) destiné à être inséré dans un rail conducteur (4') selon l'une quelconque des revendications précédentes 8 à 11, comprenant une tige (83) en forme de plaque s'étendant dans le sens de la marche (1) et ayant une extrémité, vue dans le sens de la marche, sur laquelle sont formés des éléments d'assemblage par emboîtement (84) pour un assemblage par emboîtement et un guidage par les éléments de guidage (79) du rail conducteur (4') lorsqu'ils sont insérés dans la fente (75) du rail conducteur (4').

13. Patin isolant (26) selon la revendication 12, comprenant une plaque de renforcement (87) qui, vue dans le sens de la hauteur (9), est placée au moins dans certaines zones sur la barre en forme de plaque (83).

14. Isolateur de section (19), comprenant deux pièces de liaison (22, 28) selon l'une quelconque des revendications 1 à 7 qui sont orientées avec leurs bords de sortie (24) dirigés l'un vers l'autre, et comprenant deux tronçons de contact (74) qui s'étendent parallèlement l'un à l'autre et relient les bords de sortie (24) l'un à l'autre et présentent chacun deux rails conducteurs (4') selon l'une quelconque des revendications 8 à 11, dont les bras transversaux (10) fendus sont dirigés l'un vers l'autre et entre lesquels est maintenu un patin isolant (26) respectif selon l'une des revendications 12 ou 13, dans lequel les patins isolants (26) des deux tronçons de contact (74) sont disposés décalés l'un par rapport à l'autre, vu dans le sens de la marche (1).

15. Tronçon de protection (31), comprenant deux pièces de liaison (22, 28) selon l'une quelconque des revendications 1 à 7 qui sont orientées avec leurs bords de sortie (24) dirigés l'un vers l'autre, et comprenant deux tronçons de contact (74) qui s'étendent parallèlement l'un à l'autre et qui relient les bords de sortie (24) l'un à l'autre et présentent chacun deux rails conducteurs (4') selon l'une quelconque des revendications 8 à 11, dont les bras transversaux (10) fendus sont dirigés l'un vers l'autre et entre lesquels sont maintenus respectivement deux patins isolants (26) selon l'une des revendications 12 ou 13, dans lequel les patins isolants (26) des deux tronçons de contact (74) sont disposés décalés l'un par rapport à l'autre dans le sens de la marche (1) et sont reliés respectivement par un autre rail conducteur (4'), et se chevauchent dans le sens de la marche (1).
